# EUROPEAN PATENT SPECIFICATION

(11) **EP 2 657 109 B1**
(45) Date of publication and mention of the grant of the patent: **18.10.2017**
(21) Application number: 13163674.8
(22) Date of filing: 15.04.2013
(51) Int. Cl.: B62D 25/16

(54) **Fender structure for work machine**
Kotflügel für eine Arbeitmaschine
Aile pour une machine de travail

(30) Priority: 23.04.2012 FI 20125435
(43) Date of publication of application: 30.10.2013
(73) Proprietor: Motoseal Components Oy, 26100 Rauma (FI)
(72) Inventor: Kallio, Reima, 26100 Rauma (FI); Heino, Jussi, 26100 RAUMA (FI); Elo, Seppo, 26100 RAUMA (FI); Sallinen, Kari, 26100 Rauma (FI)
(74) Representative: Kolster Oy Ab

(56) References cited:
- EP-A1- 1 043 216
- EP-A1- 1 209 067
- DE-A1-102007 038 548
- DE-U1- 29 508 410
- US-A1- 2002 024 213

## Description

### Background of the invention

The invention relates to a fender structure for a work machine, the fender structure comprising a fender arch and a fender arch support.

Work machines, such as tractors, wheel loaders, combination excavators, reach trucks and the like, use fender structures located above or around the work machine wheel to stop mud, water or other dirt from splashing when the work machine moves.

The fender structure comprises a fender arch and a fender arch support. The fender arch is a plate-like curved piece that settles above or around the wheel and stops mud, water and other dirt from splashing when the work machine moves. The fender arch support, in turn, is a support structure in connection with the fender arch and its purpose is to support the fender arch in such a manner that it retains its shape. The fender structure is fastened to the work machine through a support arm that is connected to the arch support.

A typically used fender arch support is made of metal and comprises a frame part and an opening arranged in the frame part. The task of the frame part is to support the fender arch in such a manner that the fender arch retains its shape. The opening in the frame part of the arch support offers a fastening point for the support arm of the fender structure, and the end of the support arm that is directed toward the fender structure is located into the opening in the frame part of the arch support and fastened in place with bolts, for example. The opposite end of the support arm is, in turn, fastened to the work machine.

DE-publication 29508410U1, EP-publication 1043216A1 and US-publication 2002/024213A1 disclose also arrangements for supporting a fender structure to a work machine.

### Brief description of the invention

It is an object of the invention to provide a new type of fender structure and a fender arch support for a work machine.

The fender arch support and fender structure of a work machine in accordance with the invention is characterised by what is stated in the independent claim. Different embodiments of the arch support and fender structure are disclosed in the dependent claims.

In an embodiment, the fender arch support of a work machine comprises a frame part and at least one adjustment part arrangeable on the frame part, and the relative position and/or location of the arch support frame part and adjustment part are changeable to adjust the position and/or location of the fender arch to be arranged at the arch support.

As the fender arch support of a work machine comprises a frame part and adjustment part arranged in connection with the frame part in such a manner that the position and/or location of the arch support frame part can be altered in relation to the adjustment part, the position of the fender arch arranged at the arch support in relation to the wheel of the work machine in the direction of its circumference and/or the location of the fender arch in the lateral direction of the wheel of the work machine can be easily adjusted to select the correct position and location of the fender arch in relation to the wheel of the work machine without needing to alter the position or location of the support arm, which connects the fender structure formed by the fender arch and arch support to the work machine, in relation to the work machine. The adjustment part may be replaceable, whereby it is possible to use support arms of different size and shape with the same frame part of the arch support.

According to an embodiment, the adjustment opening of the arch support frame part comprises at least one adjustment surface and the arch support adjustment part comprises at least one adjustment surface, through which adjustment surfaces the arch support frame part and adjustment part are arranged to lock into each other for the purpose of locking them into a specific position.

According to an embodiment, the adjustment surface of the arch support frame part adjustment opening and that of the adjustment part comprise complementary toothings.

According to an embodiment, the arch support frame part and adjustment part are arranged to lock with a crimp connection between them so that they are stationary relative to each other.

According to an embodiment, the arch support is at least mainly made of a plastic material.

According to an embodiment, the arch support comprises fibre-reinforced polypropylene.

According to an embodiment, the arch support is made of a plastic material, such as fibre-reinforced polypropylene or fibre-reinforced polyamide.

According to an embodiment, the fender structure of a work machine comprises a fender arch and an arch support arranged thereto, wherein the arch support is as claimed in any one of claims 1.

According to an embodiment, the fender arch and the frame part of the arch support are integrated to form a uniform structure.

According to an embodiment, the fender arch and the frame part of the fender arch support are integrated to form a uniform structure.

According to an embodiment, the fender arch and arch support comprise differing plastic materials.

According to an embodiment, the arch support of the work machine fender arch comprises a frame part made at least mainly of a plastic material and at least one fastening opening for fastening a fastening arm to the arch support, the fastening arm being arranged to connect the fender structure formed by the fender arch and the at least mainly plastic arch support to the work machine.

According to an embodiment, the arch support with a frame part made at least mainly of a plastic material comprises fibre-reinforced polypropylene.

According to an embodiment, the arch support with a frame part made at least mainly of a plastic material comprises the frame part and at least one adjustment part arrangeable to the frame part, the adjustment part comprising at least one fastening opening, and the relative position and/or location of the arch support frame part and adjustment part is changeable to adjust the position and/or location of the fender arch.

According to an embodiment, in the arch support with a frame part made at least mainly of a plastic material, the relative position of the arch support frame part and adjustment part is adjustable by rotating the frame part in relation to the adjustment part and/or the relative location of the arch support frame part and adjustment part is adjustable by moving the frame part in relation to the adjustment part.

According to an embodiment, in the arch support with a frame part made at least mainly of a plastic material, the frame part of the arch support comprises an adjustment opening, into which the adjustment part of the arch support is arranged, whereby when adjusting the relative position and/or location of the arch support frame part and adjustment part, the relative position and/or location of the adjustment opening and adjustment part is arranged to change.

According to an embodiment, in the arch support with a frame part made at least mainly of a plastic material, the adjustment opening of the arch support frame part comprises at least one adjustment surface and the arch support adjustment part comprises at least one adjustment surface, through which adjustment surfaces the arch support frame part and adjustment part are arranged to lock into each other for the purpose of locking them into a specific position.

According to an embodiment, in the arch support with a frame part made mainly of a plastic material, the adjustment surface of the arch support frame part adjustment opening and that of the adjustment part comprise complementary toothings.

According to an embodiment, in the arch support with a frame part made at least mainly of a plastic material, the arch support frame part and adjustment part are arranged to lock with a crimp connection between them so that they are stationary relative to each other.

According to an embodiment, in the arch support with a frame part made at least mainly of a plastic material, the arch support frame part comprises longitudinal ribs and transverse ribs connecting the longitudinal ribs.

According to an embodiment, the fender structure for a work machine comprises a fender arch and an arch support arranged thereto.

According to an embodiment, in the fender structure for a work machine with an arch support frame part made at least mainly of a plastic material, the fender arch and the frame part of the arch support are integrated to form a uniform structure.

According to an embodiment, in the fender structure for a work machine with an arch support frame part made at least mainly of a plastic material, the fender arch and the arch support comprise differing plastic materials.

### Brief description of the figures

The invention will now be described in greater detail by means of preferred embodiments, with reference to the accompanying drawings, in which
Figures 1 and 2 are schematic representations of a fender structure as seen obliquely from above,
Figure 3 is a schematic representation of a fender arch support as seen obliquely from above,
Figure 4 is a schematic representation of an adjustment part of a fender arch support as seen obliquely from above,
Figure 5 is a schematic representation of a part of the arch support of Figure 3 with the adjustment part of Figure 4 placed in it as seen obliquely from above,
Figure 6 is a schematic representation of another fender arch support as seen obliquely from above,
Figure 7 is a schematic representation of another adjustment part of a fender arch support as seen obliquely from above,
Figure 8 is a schematic representation of a part of the arch support of Figure 6 with the adjustment part of Figure 7 placed in it as seen obliquely from above,
Figure 9 is a schematic representation of another fender structure as seen obliquely from below, and
Figure 10 is a schematic side representation of a part of the fender structure of Figure 9.

In the figures, some embodiments of the invention are shown simplified for the sake of clarity. Like reference numerals identify like elements in the figures.

### Detailed description of the invention

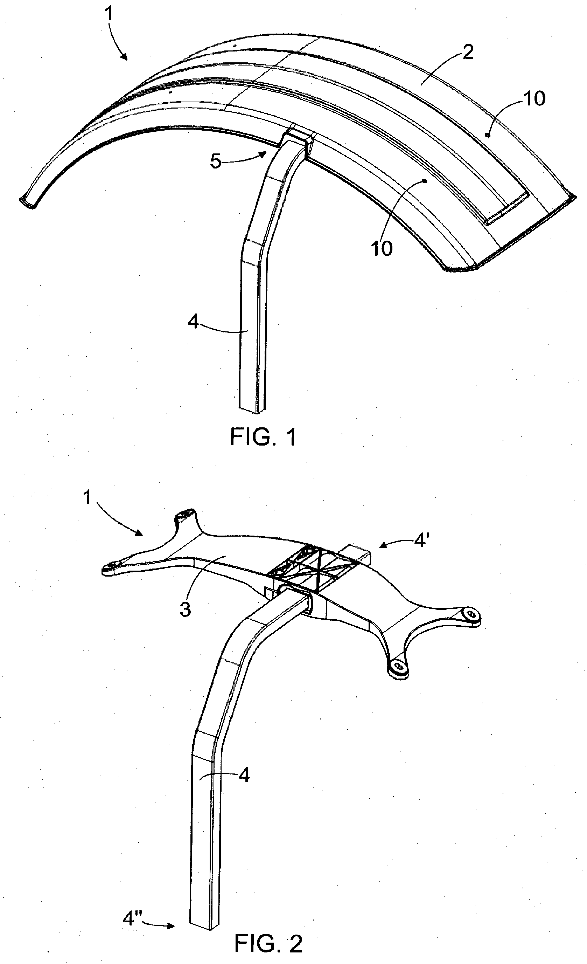

Figures 1 and 2 are schematic representations of a fender structure 1 as seen obliquely from above. The fender structure 1 comprises the fender arch 2 shown in Figure 1 and the fender arch support 3 shown in Figure 2. The arch support 3 is fastened to the fender arch 2 on its downward facing side or surface to support the fender arch 2 in such a manner that the fender arch 2 retains its shape. In the situation of Figure 2, the fender arch 2 has been removed from the arch support 3 to display the arch support 3. Figures 1 and 2 also show a support arm 4, through which the fender structure 1 is fastened to the work machine that is not shown in the figures for the sake of clarity. In the case of Figure 1, the support arm 4 goes through a boring 5 formed on the edge of the fender arch 2 to below the fender arch 2, where the first end 4' of the support arm 4 is fastened to the arch support 3 fastened to the fender arch 2 and the second end 4" of the support arm 4 is fastened to the work machine. However, said boring 5 is not absolutely necessary and the edge of the fender arch 2 can be made lower or the support arm 4 can be arranged to go around the edge of the fender arch 2. The work machine, in which the fender structure 1 is used, may be an agricultural tractor, forest tractor, wheel loader, combination excavator, telescopic reach truck for lifting hay bales, sheets or other corresponding loads, or some other corresponding work machine that is used in demanding conditions and thus has high requirements for the robustness, rigidity and strength of the fender structure 1.

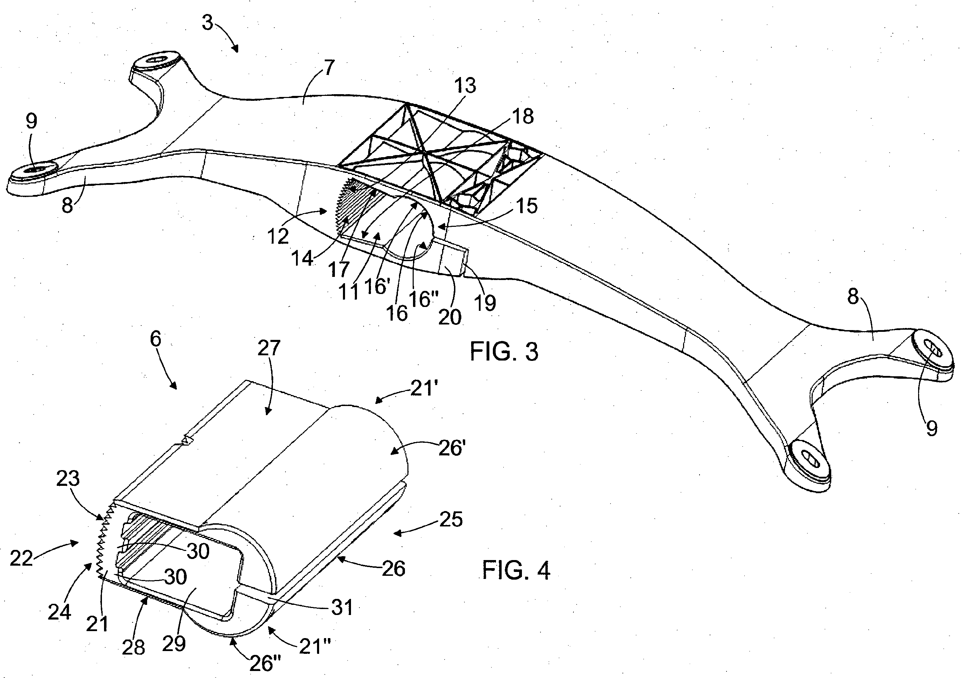

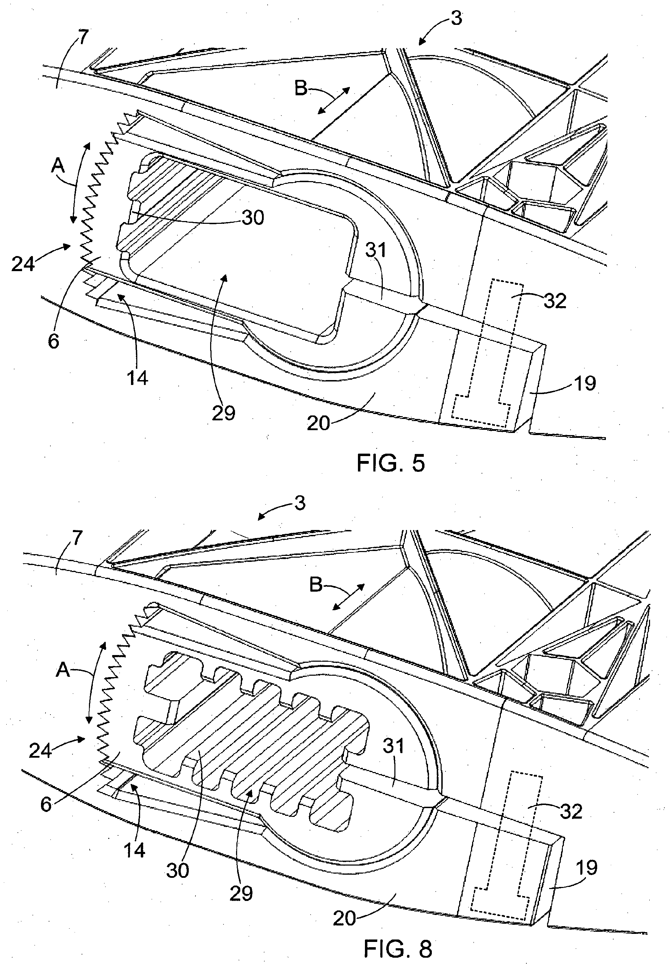

Figure 3 is a schematic representation of a fender arch support 3 as seen obliquely from above, Figure 4 is a schematic representation of an adjustment part 6 of the fender arch support as seen obliquely from above, and Figure 5 is a schematic representation of a part of the arch support 3 of Figure 3 as seen obliquely from above and with the adjustment part 6 of Figure 4 in place on the arch support 3.

The arch support 3 comprises a frame part 7, which frame part 7 may later in this specification also be referred to as the frame 7. The shape of the frame 7 in the longitudinal direction of the arch support 3 is arranged at least to some extent to comply with the shape of the fender arch 2 in its longitudinal direction and the shape of the arch support 3 in its lateral direction is arranged at least to some extent to comply with the shape of the fender arch 2 in its lateral direction. The longitudinal direction of the fender arch and thus also the longitudinal direction of the arch support is defined to be parallel to the circumference of the work machine wheel. The lateral direction of the fender arch and thus also the lateral direction of the arch support is defined to correspond to the lateral direction of the work machine wheel. In turn, the perpendicular direction of the arch support is perpendicular to both the longitudinal and lateral directions of the arch support, i.e. to the direction of the diameter of the work machine wheel. The arch support 3 further has arch support 3 fastening brackets 8 that are integrated to the frame 7. At the ends of the arch support 3 fastening brackets 8, there are arch support 3 fastening openings 9 so that screws or corresponding fastening means can be tightened through the fender arch 2 fastening openings 10 on the fender arch 2 to the arch support 3 fastening openings 9 to fasten the arch support 3 to the fender arch 2.

The frame 7 of the arch support 3 in the lateral direction of the arch support 3 has an adjustment opening 11 that in the embodiment of Figures 3 to 5 extends over the entire width of the arch support 3 and is arranged to receive the arch support 3 adjustment part 6 shown in Figure 4, with which is it possible to adjust both the position of the fender arch 2 in the direction of the work machine wheel circumference and the location of the fender arch 2 in the lateral direction of the work machine wheel.

The adjustment opening 11 has, as seen in the longitudinal direction of the arch support 3 frame 7, a first end 12 that has a first end surface 13 facing the adjustment opening 11, the first end surface 13 being in the shape of a circular arch with the centre of curvature in the direction of the adjustment opening 11 in relation to the first end surface 13 and the first end surface 13 comprising toothing 14. The adjustment opening 11 has, opposite the first end 12, a second end 15 with a second end surface 16 facing the adjustment opening 11, the second end surface 16 being in the shape of a circular arch with the centre of curvature in the direction of the adjustment opening 11 in relation to the second end surface.

The top part of the adjustment opening 11 further has an essentially even top surface 17 that connects the first end surface 13 to the second end surface 16 on the top part of the adjustment opening 11 in such a manner that between the top surface 17 and second end surface 16, an angle is formed facing downward toward the adjustment opening 11. The bottom part of the adjustment opening 11 further has an essentially even bottom surface 18 that connects the first end surface 13 to the second end surface 16 on the bottom part of the adjustment opening 11 in such a manner that between said surfaces, an angle is formed facing upward toward the adjustment opening 11. The second end surface 16 then defines together with said angles in the adjustment opening 11 an essentially cylindrical open space facing the first end surface 13.

The arch support 3 of Figures 3 and 5 further has, starting from the second end surface 16 of the adjustment opening 11 and extending to the bottom surface of the arch support 3 frame 7, a cut 19 that in the embodiment of Figures 3 and 5 extends in the lateral direction of the arch support 3 over the entire width of the arch support 3, the cut 19 also dividing the second end surface 16 into two sections: a first section 16' of the end surface 16 connected to the top surface 17 of the adjustment opening 11 and a second section 16" of the end surface 16 connected to the bottom surface 18 of the adjustment opening 11. The cut 19 separates from the bottom part of the arch support 3 frame 7 a projection 20 that is of one uniform structure with the frame 7 on the first end surface 13 of the adjustment opening 11 but a separate structure from the frame 7 on the second end surface 16, whereby the projection 20 may bend at the fastening opening 11 toward the top part of the frame 7 or away from it while the first end 12 of the adjustment opening 11 forms a pivot point for the projection 20.

Figure 4 shows, as seen obliquely from above, the arch support 3 adjustment part 6 that is arranged to be placed into the arch support 3 adjustment opening 11, as shown schematically in Figure 5. The adjustment part 6 has a body 21 with a first end 22 having a first end surface 23 facing away from the body 21, the first end surface 23 being a circular arch in shape with a centre of curvature in relation to the first end surface 23 in the direction of the adjustment part 6 body 21 and with a radius of curvature corresponding to that of the first end surface 13 of the adjustment opening 11. The first end surface 23 of the adjustment part 6 also comprises toothing 24 that corresponds in dimensions to the toothing on the first end surface 13 of the adjustment opening 11. When placing the adjustment part 6 into the adjustment opening 11 on the arch support 3 frame 7, the first end surface 23 of the adjustment part 6 is directed toward the first end surface 13 of the adjustment opening 11 in such a manner that the toothings 14 and 24 on said surfaces settle essentially in an interlaced or meshed manner with each other. At the opposite end of the adjustment part 6 body 21, there is a second end 25 that has a second end surface 26 facing away from the body 21, the second end surface 26 being essentially a circular arch in shape with the centre of curvature in relation to the second end surface 26 in the direction of the adjustment part 6 body 21. When placing the adjustment part 6 into the adjustment opening 11 on the arch support 3 frame 7, the second end surface 26 of the adjustment part 6 is correspondingly directed toward the second end surface 16 of the adjustment opening 11.

The top part of the adjustment part 6 further has an essentially even top surface 27 that connects the first end surface 23 to the second end surface 26 on the top part of the adjustment part 6 in such a manner that, between the top surface 27 and the second end surface 26, an angle is formed that opens upward away from the adjustment part 6. The bottom part of the adjustment part 6 further has an essentially even bottom surface 28 that connects the first end surface 23 to the second end surface 26 on the bottom part of the adjustment part 6 in such a manner that, between the bottom surface 28 and the second end surface 26, an angle is formed that opens downward away from the adjustment part 6. The second end surface 26 then defines together with said angles at the second end 25 of the adjustment part 6 an essentially cylindrical structure which, when the adjustment part 6 is being placed into the adjustment opening 11, is arranged into the above-mentioned essentially cylindrical space in the adjustment opening 11, as shown in Figure 5.

The adjustment part 6 further has a fastening opening 29, through which the first end 4' of the support arm 4 is arranged, when the fender structure 1 formed by the fender arch 2 and arch support 3 is being fastened to the work machine. The support arm 4 fastens to the adjustment part 6 with a crimp connection formed between the support arm 4 and adjustment part 6, when the first end of the support arm 4 is arranged through the fastening opening 29. In the fastening opening 29, on the side of the first end 22 of the adjustment part 6, there are brackets 30 facing toward the fastening opening 29 and intended to limit the free cross-sectional area of the fastening opening 29 and thus to strengthen the crimp connection acting between the support arm 4 and adjustment part 6.

The adjustment part 6 of Figure 4 has at the second end 25 of the adjustment part 6, starting from the fastening opening 29 and extending to the second end surface 26 of the adjustment part 6, a cut 31 that in the embodiment of Figure 4 extends over the entire width of the adjustment part 6, the cut 31 also dividing the second end surface 26 of the adjustment part 6 into two sections: a first section 26' of the second end surface 26 connected to the top surface 27 of the adjustment part 6 and a second section 26" of the second end surface 26 connected to the bottom surface 28 of the adjustment part 6. The cut 31 divides the body 21 of the adjustment part 6 at the second end 25 of the adjustment part 6 into two separate sections, i.e. an upper section 21' and a lower section 21" that are connected to each other at the first end 22 of the adjustment part 6, and said sections 21' and 21" may bend toward or away from each other at the second end 25 of the adjustment part 6, while the first end 22 of the adjustment part 6 forms a pivot point for them.

Figure 5 is a schematic representation, as seen obliquely from above, of a part of the arch support 3 of Figure 3, while the adjustment part 6 of Figure 4 is in place in the adjustment opening 11 of the arch support 3 as earlier shown. The first end surface 23 of the adjustment part 6 is directed toward the first end surface 13 of the adjustment opening 11 in such a manner that the toothing 24 on the first end surface 23 of the adjustment part 6 is interlaced or meshed with the toothing 14 on the first end surface 13 of the adjustment opening 11. The adjustment part 6 is locked stationary to the adjustment opening 11 and through it to the arch support 3 frame 7 with a crimp connection that is formed between the projection 20 on the arch support 3 frame 7 at the adjustment opening 11 and the arch support 3 frame 7 section outside the adjustment opening 11 and above the projection 20. Said crimp connection is achieved for instance by set screws or bolts 32 shown schematically by a dashed line in Figure 5 and arranged outside the adjustment opening 11 from the direction of the projection 20, through the projection 20 upward until the arch support 3 frame 7 section above the projection 20. When forming the crimp connection, said set screws or bolts 32 are turned from the direction of the projection 20 toward the arch support 3 frame 7 section above the projection 20, whereby the bottom surface 18 of the adjustment opening 11 and the second section 16" of the second end surface 16 move, enabled by the cut 19, toward the top surface 17 of the adjustment opening 11 and the first section 16' of the second end surface 16. The free cross-sectional area of the adjustment opening 11 then decreases and thus forms a crimp connection between the adjustment part 6 and adjustment opening 11, i.e. the adjustment part 6 and arch support 3 frame 7. A friction joint is then formed between the second end surface 16 of the adjustment opening 11 and the second end surface 26 of the adjustment part 6 to prevent the movement of the adjustment part 6 in relation to the arch support 3 frame 7 in its lateral direction. At the same time, the first end surface 13 of the adjustment opening 11 and the first end surface 23 of the adjustment part 6 remain stationary with respect to each other as their toothings 14 and 24 are interlaced or meshed, thus preventing the rotation of the adjustment part 6 and arch support 3 frame 7 relative to each other by the form lock provided by the toothings. Simultaneously, the bottom surface 28 of the adjustment part 6 moves, enabled by the cut 31, toward the top surface 27 of the adjustment part 6, thus reducing the free cross-sectional area of the fastening opening 29 on the adjustment part 6 and strengthening the crimp connection formed between the support arm 4 and adjustment part 6, while the support arm 4 is arranged through the fastening opening 29.

In the embodiment of Figures 3 to 5, the crimp connection between the arch support 3 frame 7 and adjustment part 6 is thus achieved by the flexibility formed on the arch support 3 frame 7 by the cut 19. A corresponding crimp connection between the arch support 3 frame 7 and adjustment part 6 can also be achieved by making the arch support 3 frame 7 flexible in the area of the adjustment opening 11 with another structural solution, for instance, or by manufacturing the arch support 3 frame 7 of a flexible material along at least a section of the adjustment opening 11. Instead of a crimp connection, the arch support 3 frame 7 and adjustment part 6 can also be locked to each other by a mechanical lock formed between them that may comprise a mechanical locking member, for instance, arranged between the arch support 3 frame 7 and adjustment part 6.

With reference to Figure 5, the position and/or location of the arch support 3 and, through it, the position of the fender arch 2 in relation to the wheel of the work machine in the direction of its circumference and/or the location in relation to the wheel of the work machine in its lateral direction can be adjusted by altering the position and/or location of the arch support 3 in relation to the adjustment part 6. The adjustment part 6 and, with it, the arch support 3 frame 7 and fender arch 2 can then be either fastened to the support arm 4 or separate from it. During said adjustment operation, the crimp connection or joint or locking between the arch support 3 frame 7 and adjustment part 6 is open.

The position of the fender arch 2 in relation to the wheel in the direction of its circumference can be adjusted by altering the position of the arch support 3 frame 7 fastened to the fender arch 2 in relation to the adjustment part 6. When altering the position of the arch support 3 frame 7 in relation to the adjustment part 6, the toothing 14 on the adjustment opening 11 of the arch support 3 is separated from being meshed with the toothing 24 on the adjustment part 6, the arch support 3 frame 7 is rotated in the direction shown schematically by arrow A in Figure 5 in relation to the adjustment part 6 to achieve a desired angle, and the toothing 14 on the adjustment opening 11 of the arch support 3 is again set to mesh with the toothing 24 on the adjustment part 6. After this, the arch support 3 frame 7 and adjustment part 6 are locked stationary to each other for instance by the crimp lock shown above. In the adjustment of the fender arch 2 position, the first end surface 13 of the adjustment opening 11 and the first end surface 23 of the adjustment part 6 form the adjustment surfaces of the adjustment opening 11 and adjustment part 6, and in relation to them, the position of the fender arch 2 can be adjusted with respect to the wheel of the work machine in its circumferential direction. At the extreme positions of the adjustment of the arch support 3 frame 7 position, the top surface 17 of the adjustment opening 1 meets the top surface 27 of the adjustment part 6 and the bottom surface 18 of the adjustment opening 1 meets the bottom surface 28 of the adjustment part 6. The adjustment tolerance between said extreme positions may be 12 degrees, for example. In the example shown in Figures 3 to 5, the position of the fender 2 arch can be adjusted in steps by using the toothings in the above-mentioned adjustment surfaces, but if the adjustment surfaces are smooth, the position of the fender arch 2 can be adjusted steplessly.

The location of the fender arch 2 in the lateral direction of the wheel of the work machine can, in turn, be adjusted by altering the location of the arch support 3 frame 7 fastened to the fender arch 2 in relation to the adjustment part 6. When altering the location of the arch support 3 frame 7 in relation to the adjustment part 6, the arch support 3 frame 7 is moved in its lateral direction in relation to the adjustment part 6 in the direction shown schematically by arrow B in Figure 5 into the desired location in relation to the adjustment part 6, after which the arch support 3 frame 7 and adjustment part 6 are locked stationary to each other for instance by the crimp lock shown above. The example shows that the location of the fender arch 2 in the lateral direction of the wheel of the work machine can be adjusted steplessly.

Adjusting the position of the fender arch 2 in relation to the wheel of the work machine in the direction of its circumference and/or the location of the fender arch 2 in the lateral direction of the work machine wheel makes it possible to easily select a correct position and location for the fender arch 2 in relation to the work machine wheel without needing to alter the position or location of the support arm in relation to the work machine.

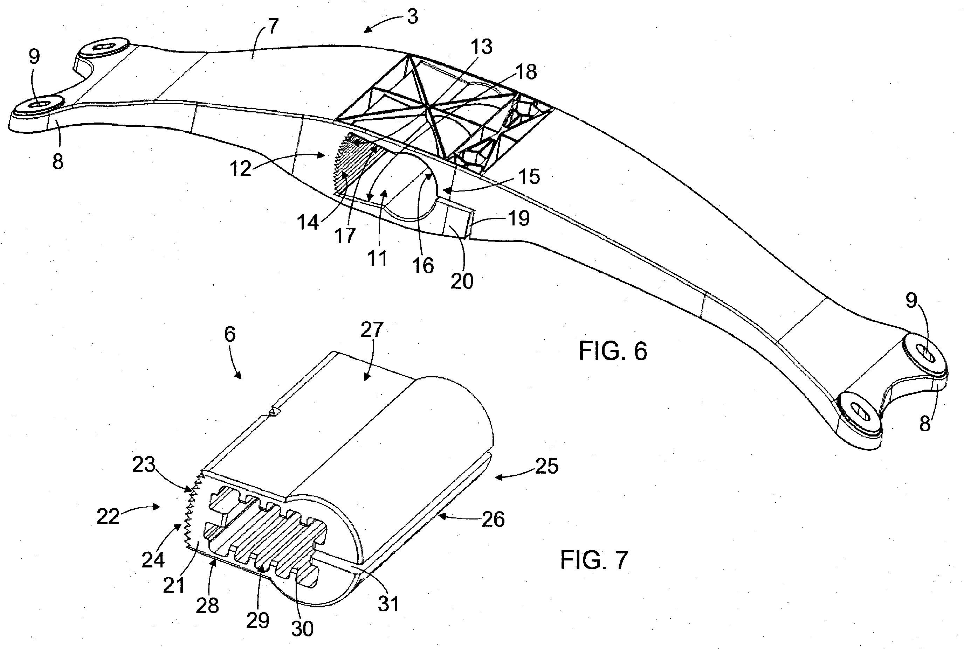

Figure 6 is a schematic representation of a second fender arch 2 support 3 as seen obliquely from above, Figure 7 is a schematic representation of a second adjustment part of the fender arch 2 support 3 as seen obliquely from above, and Figure 8 is a schematic representation of a part of the arch support 3 of Figure 6 as seen obliquely from above and with the adjustment part 6 of Figure 7 is in place on the arch support 3. The embodiment of the arch support 3 shown in Figures 6 and 8 differs from the arch support 3 embodiment of Figures 3 and 5 mainly in the design of the fastening brackets 8 on the arch support 3 frame 7, as the range of the fastening bracket 8 from the frame 7 is smaller in the embodiment shown in Figures 6 and 8 than that shown in Figures 3 and 5. The embodiment of the adjustment part 6 shown in Figure 7 differs from that of the adjustment part 6 shown in Figure 4 mainly in the design of the fastening opening 29 of the support arm 4 in the adjustment part 6 in such a manner that in the adjustment part 6 of Figure 7, the fastening opening 29 comprises several brackets 30 that limit the free cross-sectional area of the fastening opening 29 and may thus more easily receive support arms of different shapes and sizes in cross-section without weakening the crimp connection between the support arm 4 and adjustment part 6.

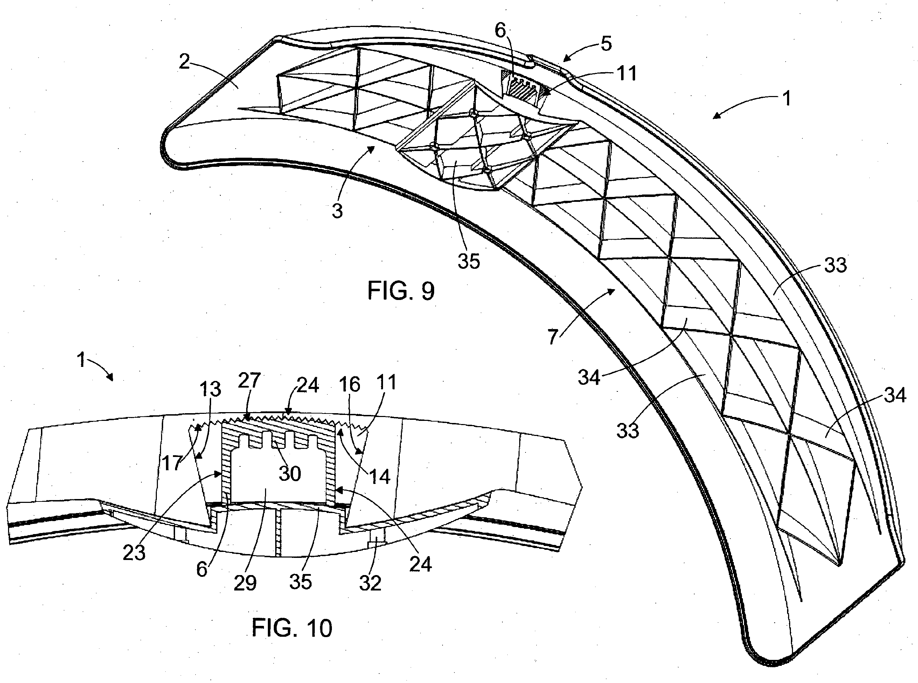

The arch support 3 and the related adjustment part 6 may be made of many different materials, such as metal or plastic. A plastic arch support may be made by injection moulding, for instance. During the injection moulding step, it is possible to use an insert made of metal or a composite material, for instance, around which the plastic material of the arch support 3 frame part 7 is moulded, the insert forming a structure stiffening the frame part. Further, other types of inserts, such as nut inserts, can be arranged in the mould. In comparison with a metal arch support, an arch support made at least mainly of plastic is lighter, whereby the total weight of the fender structure 1 becomes smaller and the weight or stress directed to the support arm is smaller, which may, if desired, be taken into consideration in the dimensioning and material selection of the support arm 4. Further, in comparison with a metal arch support, an injection-moulded plastic arch support leaves no waste material during manufacturing, which is usual when using metal manufacturing blanks. This reduces costs related to the transportation and waste disposal of the manufacturing material. In addition, an arch support made of a plastic material has, due to its generally good corrosion resistance, a longer service life than arch supports made of metal. An arch support frame part made of a plastic material may be an essentially solid piece or it may comprise, as shown below in Figure 9, longitudinal ribs 33 and transverse ribs 34 joining the longitudinal ribs, with which it is easy to affect the torsional and bending stiffness properties of the arch support 3 while lightening the weight of the arch support 3.

An arch support frame part made of a plastic material may also be made to have a cavity or cavities. This type of frame part may be made by gas-assisted injection moulding or rotation moulding. If desired, the cavity may be filled with foam, for example. By means of said cavity or cavities and the possible foam, it is possible to decrease the weight of the frame part and/or affect the torsional or bending stiffness properties of the arch support.

According to an alternative, the plastic material may be polyethylene. According to another alternative, the plastic material may be polypropylene or polyamide or fibre-reinforced polypropylene or polyamide. An advantage of the fibre-reinforced polypropylene and polyamide is the shock resistance and torsional and bending stiffness of said materials even when cold. In addition, said materials endure well chemicals, UV radiation and other corresponding environmental factors. An advantage of polypropylene over polyamide is its lower price.

The arch support may be made of a plastic material even without the above-mentioned adjustment possibilities, whereby a fastening opening 29 is arranged on the arch support frame part for a support arm 4. The position or location of the fender arch 2 in relation to the work machine wheel then cannot be adjusted afterward without altering the location or position of the support arm, but even then, the arch support has a long service life due to its good corrosion resistance in comparison with arch supports made of metal.

Figure 9 is a schematic representation of a second fender structure 1 as seen obliquely from below and Figure 10 is a schematic side representation of a part of the fender structure 1 of Figure 9. The fender structure 1 has a fender arch 2 and an arch support 3 integrated to, i.e. implemented as a uniform structure with, the fender arch 2. The arch support 3 comprises a frame part 7, i.e. frame 7, that is formed of longitudinal ribs 33 parallel to the fender arch 2 and transverse ribs 34 connecting said longitudinal ribs. The frame 7 has an adjustment opening 11 with an adjustment part 6 having a fastening opening 29 and brackets 30 in the fastening opening 29 for fastening the support arm 4 to the fender structure 1. The location and/or position of the arch support 3 frame 7 can be altered in relation to the adjustment part 6 to alter the position and/or location of the fender arch 2 in relation to the wheel of the work machine. The fender structure 1 further comprises a locking element 35, through which the adjustment part 6 and arch support 3 frame 7 can be locked together with a crimp connection.

The adjustment opening 11 has a top surface 17 that forms a part of the arch support 3 frame part 7 and the top surface 17 has toothing 14. In addition, the adjustment opening 11 has a first end surface 13 and a second end surface 16.

The adjustment part 6 has a top surface 27 with toothing 24 that when placing the adjustment part 6 into the adjustment opening 11 is arranged to interlace or mesh with the toothing on the top surface 17 of the adjustment opening 11. In addition, the adjustment part 6 has a first end surface 23 that is directed toward the first end surface 13 of the adjustment opening 11, and a second end surface 26 that is directed toward the second end surface 16 of the adjustment opening 11.

The adjustment part 6 and arch support 3 frame 7 are locked stationary in relation to each other with the locking element 35 that is fastened by fastening screws or bolts 32, for instance, to the arch support 3 frame 7. The locking element 35 presses the adjustment part 6 toward the top surface 17 of the adjustment opening 11, whereby between the top surface 17 of the adjustment opening 11 and the top surface 27 of the adjustment part 6 a crimp connection is formed to lock the arch support 3 frame 7 and through it the fender arch 2 stationary in relation to the adjustment part 6 and the support arm 4 fastened to it.

In the fender structure 1 according to Figures 9 and 10, the position of the fender arch 2 in relation to the wheel of the work machine parallel to its circumference can be adjusted by altering the relative location of the adjustment surfaces formed by the top surface 17 of the adjustment opening 11 and the top surface 27 of the adjustment part 6 in the longitudinal direction of the fender arch 2, i.e. by rotating the fender arch 2 and, with it, the arch support 3 frame 7 in relation to the adjustment part 6. The first end surface 13 of the adjustment opening 11 and the first end surface 23 of the adjustment part 6 as well as the second end surface 16 of the adjustment opening 11 and the second end surface 26 of the adjustment part 6 form mating surface pairs that define the extreme limits for adjusting the position of the fender arch 2. The location of the fender arch 2 in relation to the wheel of the work machine in its lateral direction can, in turn, be adjusted by moving the fender arch 2 and, with it, the arch support 3 frame 7 in relation to the adjustment part 6 in the lateral direction of the fender arch 2.

The fender structure 1 according to Figures 9 and 10 can be made as an integrated structure of the fender arch 2 and arch support 3 frame part 7 of a plastic material by injection moulding, for example. The fender arch 2 and arch support 3 frame part 7 may be either of the same plastic material or of different plastic materials. When the fender arch 2 and arch support 3 frame part 7 are made of different plastic materials, the arch support 3 frame part 7 may for instance be of fibre-reinforced polypropylene and the fender arch of a more flexible mixture of ethylene-propylene-diene rubber and polypropylene.

In the fender structure 1 according to Figures 9 and 10, the arch support 3 is arranged on the bottom surface of the fender arch 2, i.e. on the surface facing the wheel of the work machine, but the arch support 3 could alternatively also be arranged on the top surface of the fender arch 2, i.e. on the surface facing away from the wheel of the work machine.

It will be apparent to a person skilled in the art that as technology advances, the basic idea of the invention may be implemented in many different ways. The invention and its embodiments are thus not restricted to the examples described above but may vary within the scope of the claims. The examples described above present embodiments of the arch support, in which both the position and location of the arch support frame part can be adjusted in relation to the adjustment part, but the arch support can also be implemented utilizing the adjustment part in such a manner that only the position or location of the frame part can be adjusted in relation to the adjustment part. In addition to the examples described above, arch support embodiments are also possible, where the arch support comprises more than one adjustment part and/or the adjustment part comprises more than one fastening opening for the support arm.

## Claims

1. An arch support (3) for a work machine fender arch (2), the arch support (3) to be fastened or integrated to the fender arch (2) on its downward facing side or surface to support the fender arch (2) to retain its shape, wherein
the arch support (3) comprises a frame part (7), an adjustment opening (11) in the frame part (7) and at least one adjustment part (6) arrangeable on the frame part (7),
the adjustment part (6) comprises at least one fastening opening (29) for fastening a fastening arm (4) to the arch support (3), the fastening arm (4) being arranged to connect the fender structure (1) formed by the fender arch (2) and the arch support (3) connected thereto to the work machine, **characterised in that**,
the adjustment part (6) of the arch support 3) is arranged into the adjustment opening (11) in the arch support (3) frame part (7), whereby when adjusting the relative position and/or location of the arch support (3) frame part (7) and the adjustment part (6), the relative position and/or location of the adjustment opening (11) and the adjustment part (6) is arranged to move,
and that the relative position of the arch support (3) frame part (7) and the adjustment part (6) is adjustable by rotating the frame part (7) in relation to the adjustment part (6), and/or the relative location of the arch support (3) frame part (7) and the adjustment part (6) is adjustable by moving the frame part (7) in relation to the adjustment part (6), to adjust, in relation to a wheel of the work machine in the direction of its circumference and/or in its lateral direction, the position and/or location of the fender arch (2) to be arranged to the arch support (3).

2. An arch support as claimed in claim 1, **characterised in that** the adjustment opening (11) of the arch support (3) frame part (7) comprises at least one adjustment surface (13, 17), and the adjustment part (6) of the arch support (3) comprises at least one adjustment surface (23, 27), through which adjustment surfaces the arch support (3) frame part (7) and adjustment part (6) are arranged to lock together to lock the frame part (7) and adjustment part (6) together in a specific position.

3. An arch support as claimed in claim 2, **characterised in that** the adjustment surface (23, 27) of the adjustment opening (11) and the adjustment surface (23, 27) of the adjustment part (6) comprise complementary toothings (14, 24).

4. An arch support as claimed in any one of the preceding claims, **characterised in that** the arch support (3) frame part (7) and the adjustment part (6) are arranged to lock stationary in relation to each other by means of a crimp connection between the frame part (7) and adjustment part (6).

5. An arch support as claimed in any one of the preceding claims, **characterised in that** the arch support (3) is at least mainly made of a plastic material.

6. An arch support as claimed in claim 5, **characterised in that** the arch support (3) comprises fibre-reinforced polypropylene.

7. A work machine fender structure (1) that comprises a fender arch (2) and an arch support (3) arranged to the fender arch (2), **characterised in that** the arch support (3) is an arch support (3) as claimed in any one of claims 1 to 6.

8. A fender structure as claimed in claim 7, **characterised in that** the fender arch (2) and arch support (3) frame part (7) are integrated to form one uniform structure.

## Patentansprüche

1. Kotflügelhalter (3) für einen Arbeitsmaschinen-Kotflügel (2), wobei der Kotflügelhalter (3) zur Befestigung oder Integration an dem Kotflügel (2) an seiner nach unten gerichteten Seite oder Fläche dient, um den Kotflügel (2) zu unterstützen, sodass er seine Form behält, wobei
der Kotflügelhalter (3) ein Rahmenteil (7), eine Einstellöffnung (11) in dem Rahmenteil (7) und mindestens ein Einstellteil (6), das an dem Rahmenteil (7) angeordnet werden kann, umfasst,
das Einstellteil (6) mindestens eine Befestigungsöffnung (29) zur Befestigung eines Befestigungsarms (4) an dem Kotflügelhalter (3) umfasst, wobei der Befestigungsarm (4) dazu eingerichtet ist, die durch den Kotflügel (2) und den damit verbundenen Kotflügelhalter (3) gebildete Kotflügelstruktur (1) mit der Arbeitsmaschine zu verbinden,
**dadurch gekennzeichnet, dass** das Einstellteil (6) des Kotflügelhalters (3) in der Einstellöffnung (11) in dem Rahmenteil (7) des Kotflügelhalters (3) angeordnet ist, wobei beim Einstellen der relativen Position und/oder Lage des Rahmenteils (7) des Kotflügelhalters (3) und des Einstellteils (6) die relative Position und/oder Lage der Einstellöffnung (11) und des Einstellteils (6) dazu eingerichtet ist, sich zu bewegen,
und dass die relative Position des Rahmenteils (7) des Kotflügelhalters (3) und des Einstellteils (6) durch Drehen des Rahmenteils (7) in Bezug auf das Einstellteil (6) einstellbar ist, und/oder die relative Lage des Rahmenteils (7) des Kotflügelhalters (3) und des Einstellteils (6) durch Bewegen des Rahmenteils (7) in Bezug auf das Einstellteil (6) einstellbar ist, um, in Bezug auf ein Rad der Arbeitsmaschine in der Richtung seines Umfangs und/oder in seiner seitlichen Richtung, die Position und/oder Lage des an dem Kotflügelhalter (3) anzuordnenden Kotflügels (2) einzustellen.

2. Kotflügelhalter nach Anspruch 1, **dadurch gekennzeichnet, dass** die Einstellöffnung (11) des Rahmenteils (7) des Kotflügelhalters (3) mindestens eine Einstellfläche (13,17) umfasst und das Einstellteil (6) des Kotflügelhalters (3) mindestens eine Einstellfläche (23, 27) umfasst, durch welche Einstellflächen das Rahmenteil (7) des Kotflügelhalters (3) und das Einstellteil (6) so angeordnet sind, dass sie miteinander verriegeln, um das Rahmenteil (7) und das Einstellteil (6) in einer spezifischen Position miteinander zu verriegeln.

3. Kotflügelhalter nach Anspruch 2, **dadurch gekennzeichnet, dass** die Einstellfläche (23, 27) der Einstellöffnung (11) und die Einstellfläche (23, 27) des Einstellteils (6) komplementäre Verzahnungen (14, 24) umfassen.

4. Kotflügelhalter nach einem der vorhergehenden Ansprüche, **dadurch gekennzeichnet, dass** das Rahmenteil (7) des Kotflügelhalters (3) und das Einstellteil (6) dazu eingerichtet sind, sich in Bezug zueinander mittels einer Klemmverbindung zwischen dem Rahmenteil (7) und dem Einstellteil (6) stationär zu verriegeln.

5. Kotflügelhalter nach einem der vorhergehenden Ansprüche, **dadurch gekennzeichnet, dass** der Kotflügelhalter (3) mindestens hauptsächlich aus einem Kunststoffmaterial hergestellt ist.

6. Kotflügelhalter nach Anspruch 5, **dadurch gekennzeichnet, dass** der Kotflügelhalter (3) faserverstärktes Polypropylen umfasst.

7. Arbeitsmaschinen-Kotflügelstruktur (1), welche einen Kotflügel (2) und einen an dem Kotflügel (2) angeordneten Kotflügelhalter (3) umfasst, **dadurch gekennzeichnet, dass** der Kotflügelhalter (3) ein Kotflügelhalter (3) nach einem der Ansprüche 1 bis 6 ist.

8. Kotflügelstruktur nach Anspruch 7, **dadurch gekennzeichnet, dass** der Kotflügel (2) und das Rahmenteil (7) des Kotflügelhalters (3) integriert sind, sodass sie eine einheitliche Struktur bilden.

## Revendications

1. Support de cintre (3) pour un cintre de protection d'engin de travail (2), le support de cintre (3) devant être fixé ou intégré au cintre de protection (2) sur son côté ou sa surface tourné(e) vers le bas pour supporter le cintre de protection (2) afin de conserver sa forme, dans lequel :
le support de cintre (3) comprend une partie de châssis (7), une ouverture d'ajustement (11) dans la partie de châssis (7) et au moins une partie d'ajustement (6) qui peut être agencée sur la partie de châssis (7),
la partie d'ajustement (6) comprend au moins une ouverture de fixation (29) pour fixer un bras de fixation (4) au support de cintre (3), le bras de fixation (4) étant agencé pour raccorder la structure de protection (1) formée par le cintre de protection (2) et le support de cintre (3) qui lui est raccordé à l'engin de travail, **caractérisé en ce que** :
la partie d'ajustement (6) du support de cintre (3) est agencée dans l'ouverture d'ajustement (11) de la partie de châssis (7) du support de cintre (3), de sorte que, lors de l'ajustement de la position relative et/ou de l'emplacement de la partie de châssis (7) du support de cintre (3) et de la partie d'ajustement (6), la position relative et/ou l'emplacement de l'ouverture d'ajustement (11) et de la partie d'ajustement (6) soi(en)t agencé(s) pour se déplacer et
la position relative de la partie de châssis (7) du support de cintre (3) et de la partie d'ajustement (6) est ajustable en faisant tourner la partie de châssis (7) par rapport à la partie d'ajustement (6) et/ou l'emplacement relatif de la partie de châssis (7) du support de cintre (3) et de la partie d'ajustement (6) est ajustable en déplaçant la partie de châssis (7) par rapport à la partie d'ajustement (6) pour ajuster, par rapport à une roue de l'engin de travail dans la direction de sa circonférence et/ou dans sa direction latérale, la position et/ou l'emplacement du cintre de protection (2) à agencer au support de cintre (3).

2. Support de cintre selon la revendication 1, **caractérisé en ce que** l'ouverture d'ajustement (11) de la partie de châssis (7) du support de cintre (3) comprend au moins une surface d'ajustement (13, 17) et la partie d'ajustement (6) du support de cintre (3) comprend au moins une surface d'ajustement (23, 27) à travers lesquelles surfaces d'ajustement la partie de châssis (7) du support de cintre (3) et la partie d'ajustement (6) sont agencées pour se bloquer l'une l'autre afin de bloquer la partie de châssis (7) et la partie d'ajustement (6) conjointement dans une position spécifique.

3. Support de cintre selon la revendication 2, **caractérisé en ce que** la surface d'ajustement (23, 27) de l'ouverture d'ajustement (11) et la surface d'ajustement (23, 27) de la partie d'ajustement (6) comprennent des dentures complémentaires (14, 24).

4. Support de cintre selon l'une quelconque des revendications précédentes, **caractérisé en ce que** la partie de châssis (7) du support de cintre (3) et la partie d'ajustement (6) sont agencées pour se bloquer de manière stationnaire l'une par rapport à l'autre au moyen d'un raccord de sertissage entre la partie de châssis (7) et la partie d'ajustement (6).

5. Support de cintre selon l'une quelconque des revendications précédentes, **caractérisé en ce que** le support de cintre (3) est constitué au moins principalement d'une matière plastique.

6. Support de cintre selon la revendication 5, **caractérisé en ce que** le support de cintre (3) comprend du polypropylène renforcé par des fibres.

7. Structure de protection d'engin de travail (1) qui comprend un cintre de protection (2) et un support de cintre (3) agencé sur le cintre de protection (2), **caractérisée en ce que** le support de cintre (3) est un support de cintre (3) selon l'une quelconque des revendications 1 à 6.

8. Structure de protection selon la revendication 7, **caractérisé en ce que** le cintre de protection (2) et la partie de châssis (7) du support de cintre (3) sont intégrés pour former une structure uniforme unique.
